# EUROPEAN PATENT SPECIFICATION

(11) **EP 0 618 071 B1**
(45) Date of publication and mention of the grant of the patent: **23.09.1998**
(21) Application number: 94103869.7
(22) Date of filing: 14.03.1994
(51) Int. Cl.: B32B 31/00

(54) **Device to apply a plastic coating to both sides of a support**
Vorrichtung zum beidseitigen Beschichten einer Materialbahn
Dispositif pour revêtir les deux faces d'un matériau en bande

(30) Priority: 31.03.1993 IT UD930053
(43) Date of publication of application: 05.10.1994
(73) Proprietor: INTERPLAST Srl, Segrate San Felice (MI) (IT)
(72) Inventor: Colombi, Luigi, I-20090 Pantigliate (Milano) (IT); Fontana, Luigi, I-20090 Settala (Milano) (IT)
(74) Representative: Petraz, Gilberto Luigi

(56) References cited:
- EP-A- 0 261 246
- EP-A- 0 319 252
- EP-A- 0 359 057
- EP-A- 0 443 298
- EP-A- 0 485 895
- EP-A- 0 488 870
- DE-A- 4 102 914
- FR-A- 2 427 905
- GB-A- 1 220 080
- GB-A- 2 223 445
- US-A- 4 096 018
- US-A- 4 481 876
- PATENT ABSTRACTS OF JAPAN vol. 10, no. 281 (M-520)(2337) 25 September 1986 & JP-A-61 102 235 (DAIO KAKOSHI KOGYO) 20 May 1986

## Description

The invention relates to an apparatus to apply and line a plastic coating to both sides of a support, the device being suitable to apply plastic films continuously to supports of a paper type, to woven fabrics, to metal sheets, etc. for the purpose of protection, reinforcement and/or surface finish, the support being continuous or consisting of sheets, and the device comprising two substantially identical calenders, each consisting of two rolls, one of which having a smaller diameter and being arranged on the side of the support or the first plastic film which has been already applied, the two calenders being positioned in succession along the path of the support.

In a device of this type, as described in US-4,096,018, each calender has two heated rolls. The calenders lie in different planes which are arranged orthogonally to each other. For enabling a good connection of the plastic films to the support, the support runs through three loops which are arranged in a drying chamber. After an adhesive has been applied to one side of the support, it is led through the first loop in the drying chamber. Then, a first plastic film is applied to one side of the support. This is repeated in a second loop through the drying chamber for applying the second plastic film in the second calender. For ensuring a good connection of the plastic films to the support, the laminate has to pass through a third loop in the drying chamber. This device is rather complicated and needs a plurality of different paths for applying the plastic films to the support by means of the calenders. The drying chamber is heated in order to condition the support for connecting the plastic films thereto. It takes a considerable time until the support is preconditioned and the plastic film can be applied thereto. The speed of production has to be reduced if a sufficient quality of the product is desired.

EP 0 319 252 A2 describes a device for applying a layer to one side of a support material. The layer is led through an oven where it is preheated and an adhesive which is applied thereto is dried. The laminate is combined with a conveyor in a calender consisting of a heated nip roller and a rubber-surfaced pressure roller. This calender needs the oven for preheating for applying one laminate to a side of the support.

EP 0 488 870 A1 discloses a calender for applying plastic films to each side of a support. The calender comprises two heated rolls forming a nip to which the two plastic films and the support are simultaneously fed. Each plastic film is let over a large heated drum for preheating the respective plastic film. The support and the plastic films are simultaneously applied to each other in the gap between the heated rolls.

EP 0 261 246 A1 teaches a device for bonding a film to a support by means of thermocompression. The film as well as the support are preheated before they are combined between two nip rollers. One nip roller is heated and the other is a simple press roller. The feeding angle of the film with respect to the support is automatically adjusted within small ranges.

It is the object of the present invention to provide an improved apparatus of the above-mentioned type, which is capable to produce the support with two plastic films applied thereto at a higher speed and with a high quality.

This object is attained by an apparatus of the above-mentioned type which is characterized in that each calender consists of at least one first heated chromium-plated steel roll polished to a mirror finish and arranged on the side of the respective plastic film to be applied, and of a second unheated rubberized roll having a smaller diameter, the calenders being position in succession on a substantially horizontal plane of application of the plastic coating to the support, and being arranged reciprocally rotated substantially by 180° in relation to the common plane of application of the plastic coating, and the plane in which the calenders lie being arranged at an angle of around 90° and traverse to the common plane of application of the plastic coating, the plastic film cooperating with the respective chromium-plated steel roll over at least 90° of the surface thereof.

This apparatus enables a high speed of feed of the layers to be coupled together and a high output. However, the apparatus can be constructed rather simply. Nevertheless, it enables to produce plastic coatings to both sides of the support with a high quality.

The plastic film is sufficiently heated over the 90° contact with the steel roll. Although the plastic film may run at a considerable high speed, this angle is sufficient for the thermocompression between the rolls. This may be accomplished although the rubberized roll is not heated.

The same applies to the second calender which is arranged in succession on the substantially horizontal plane of application of the plastic coating to the support. Thus, the apparatus only needs one common plane for the support between the calenders. The calenders are reciprocated by 180° with respect to each other so that each calender separately applies one plastic coating to the support, the position of the plane of the rolls of the each calender being arranged orthogonally to said common plane.

Advantageous features and embodiments are cited in the dependent claims.

The apparatus to apply a plastic coating to both sides of a support according to the invention consists of at least two calenders with superimposed rolls, the calenders being positioned in succession on the plane of feed of the support to be plastic-coated.

One of the at least two calenders applies continuously the plastic coating film, whether heat-fusible or not, to one face of the support, whereas the other calender applies the plastic coating film continuously to the other face of the support.

According to the invention both the calenders comprise a chromium-plated steel roll polished to a mirror finish and a roll covered with a rubberised layer.

The application of the plastic film is achieved by unwinding, by means of suitable unwinding rolls for instance, the plastic film about an arc of the surface of the chromium-plated steel roll polished to a mirror finish and by then making the film cooperate with the surface to be coated of the support in the zone where the support is at a tangent to and between the two calendering rolls.

The arc of the winding of the plastic film about the circumference of the chromium-plated steel roll is at least 90°.

The chromium-plated steel roll polished to a mirror finish is heated by internally circulated oil or water or by other heating systems so as to bring its surface temperature to the temperature of activation of the heat-activatable adhesive, if used, or else to the melting temperature of the heat-fusible plastic film (80°C-140°C but advantageously about 110°C).

The roll coated with the rubberised layer, instead, is not heated. This enables a considerable saving of energy to be achieved since the transmission of heat in the rubberised layer is considerably less than the transmission of heat in the chromium-plated steel roll.

In the station where the plastic film is applied to the upper face of the support, the chromium-plated roll with the mirror finish is the upper roll of the calender, while the roll with the rubberised layer is the lower roll.

In the station where the plastic film is applied to the lower face of the support, the calender is upside-down and the chromium-plated roll with the mirror finish is the lower roll of the calender.

If a layer of heat-activatable adhesive is interposed, a station to spread the adhesive on the plastic coating film is included and is followed by a station to dry the adhesive.

According to a variant the chromium-plated roll with the mirror finish is covered with a layer of non-stick material by direct application or by spraying.

The attached figures are given as a non-restrictive example and show some preferred embodiments of the invention as follows:-
- Fig.1: shows a first form of embodiment of the apparatus to apply a plastic coating to both sides of a support according to the invention with an application of an adhesive;
- Fig.2: show a variant of the apparatus of Fig.1 with the use of a plastic heat-fusible film.

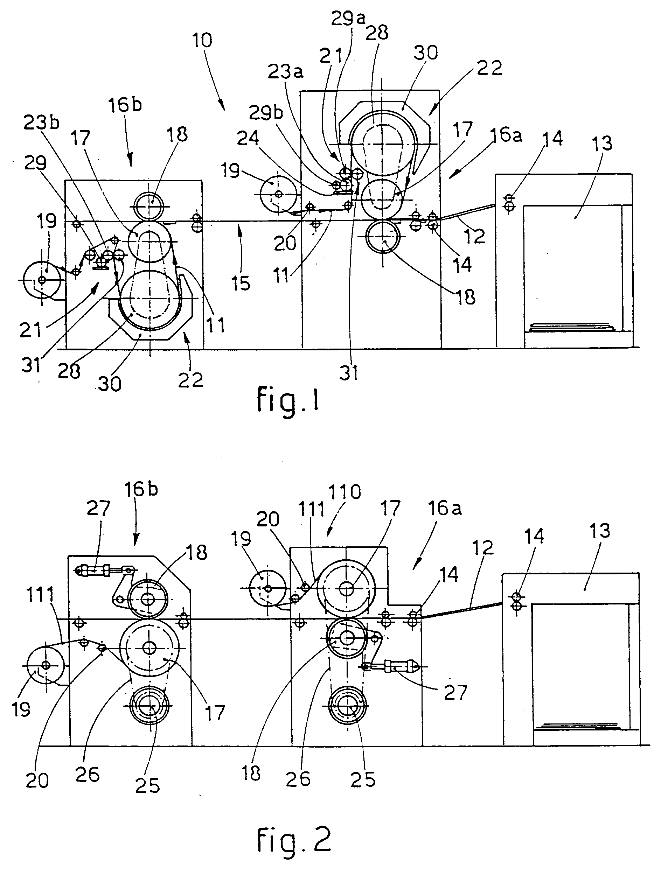

An apparatus 10 to apply a plastic coating, as shown in Fig.1, is suitable to apply a plastic coating film 11 to both faces of a support 12. The support 12 is typically of a type such as paper, but the invention is applied also to supports consisting of woven fabrics, metal sheets or other suitable types of materials.

The support 12 is withdrawn in a continuous form or in sheets from a store 13 and is fed by small drawing rolls 14.

The support 12 is fed along a plane 15 of application of a plastic coating, the plane in this case being substantially horizontal, and through a first calender 16a pre-arranged in this case to apply the plastic coating film 11 to the upper face of the support 12.

The first calender 16a includes a first roll 17, the upper roll in this example, made of chromium-plated steel polished to a mirror finish and also a second roll 18, the lower roll in this example, coated with a rubberised layer.

The first chromium-plated roll 17 with the mirror finish is heated in a known manner so as to bring its surface temperature to the temperature of activation of a layer of adhesive, whereas the second roll 18 coated with a rubberised layer is not heated.

The plastic film 11 is fed from an unwinding reel 19 through suitable transmission rolls 20 and is, in this case, brought in succession to a station 21 for the spreading of an adhesive and to a station 22 for the drying of the adhesive.

The transmission rolls 20 are so arranged three-dimensionally as to keep the plastic film 11 under tension while it is being unwound from the reel 19.

Within the first calender 16a in this example the adhesive spreading station 21 consists of a spreader roll 23a, which dips in a tank 24 of adhesive and cooperates with a dosage roll 29, which rotates in contact with the surface of application of the plastic film 11 in cooperation with a heated counter-thrust roll 31.

The spreader roll 23a may cooperate with a further dosage roll 29a so as to apply the right quantity of adhesive to the plastic film 11.

The adhesive drying station 22 consists in a known manner of a blower system 30 and a heated chromium-plated roll 28, for instance.

The heated chromium-plated roll 28 typically has a surface temperature of about 80°-90°C.

The blower system 30 surrounds the heated chromium-plated roll 28 along an arc of the circumference of the roll 28 of at least 120°.

The plastic film 11 is then unwound about the chromium-plated mirror-finish first roll 17 along an arc of at least 90° of the circumference of the roll 17 and is coupled under pressure to the upper face of the support 12 to be plastic-coated.

The support 12 with its upper face now plastic-coated is then fed through the second calender 16b, which is prearranged to apply a plastic film 11 to the lower face of the support 12.

For this purpose the second calender 16b is upside-down as compared to the first calender 16a and has a first chromium-plated steel roll 17 polished to a mirror finish in a lower position and a second roll 18 coated with a rubberised layer in a higher position.

The feed of the plastic film 11 now arriving below the support 12 is carried out substantially with the same methods as in the first calender 16a and by means of the same elements.

The adhesive spreading station 22 in this case provides for a dosage roll 29 to be positioned between a spreader roll 23b and a tank 24 for adhesive.

A heated counter-thrust roll 31 cooperates with the spreader roll 23b.

The spreader roll 23b advantageously creates a loop in the path of the plastic film 11 being unwound.

The ratio between the speeds of the two calenders 16a-16b can be maintained in a known manner by an electrical control group, a chain or an intermediate speed reduction unit.

Fig.2 shows an apparatus 110 to apply a plastic coating which is substantially analogous to the apparatus 10 of Fig.1 and in which the plastic film 111 is of a heat-fusible type. In this case the heat-fusible plastic film 111 is applied by being melted and simultaneously compressed onto the support 12. The adhesive spreading station 21 and adhesive drying station 22 are therefore not required.

In both the cases described and, in particular, where a heat-fusible plastic film 111 is employed; the speed of feed of the support 12 along the plastic coating plane 15 can be kept higher at about 50-100 metres per minute as compared to the devices of the state of the art applying plastic coatings on both sides, and a saving of energy is achieved. This is so inasmuch as the transmission of heat, in view of the high temperatures required particularly with heat-fusible plastic film 111, is much quicker with chromium-plated steel rolls 17 than with rubberised rolls 18.

Fig.2 shows also drive motors 25, connected to the respective first and second rolls 17-18 by transmission belts 26, and pistons 27, which act on the second rubberised rolls 18 so as to adjust the pressure and the rolling pass according to the thickness and rigidity of the support 12.

The drive motors 25 and pistons 27 are also included in the device 10 of Fig.1 but have not been shown for reasons of illustrational convenience.

## Claims

1. Apparatus to apply in line a plastic coating to both sides of a support, the device being suitable to apply plastic films (11, 111) continuously to supports (12) of a paper type, to woven fabrics, to metal sheets, etc. for the purpose of protection, reinforcement and/or surface finish, the support (12) being continuous or consisting of sheets, and the device comprising two substantially identical calenders (16), each consisting of two rolls (17, 18), one of which having a smaller diameter and being arranged on the side of the support (12) or the first plastic film which has already been applied, the two calenders being positioned in succession along the path of the support (12),
**characterized in that**
each calender (16) consists of at least one first heated chromium-plated steel roll (17) polished to a mirror finish and arranged on the side of the respective plastic film to be applied, and of a second unheated rubberized roll (18) having said smaller diameter, the calenders (16) being positioned in succession on a substantially horizontal plane (15) for application of the plastic coating to the support (12), and being arranged reciprocally rotated substantially by 180° in relation to the common plane (15) of application of the plastic coating, and the plane in which the calenders (16) lie being arranged at an angle of around 90° and transverse to the common plane (15) of application of the plastic coating, the plastic film (11, 111) cooperating with the respective chromium-plated steel roll (17) over at least 90° of the surface thereof.

2. Apparatus according to claim 1, wherein a station (21) for spreading adhesive on the plastic film on the side to which the plastic film (11) is applied is provided along the path of the plastic film (11) before the respective calender (16).

3. Apparatus according to claim 2, wherein the station (21) for spreading adhesive comprises at least one spreader roll (23), a tank (24) for holding adhesive and a dosage roll (29), the spreader roll (23) cooperating with a heated counter-thrust roll (31).

4. Apparatus according to claim 2 or 3, wherein a drying station (22) for drying the adhesive applied to the plastic film (11) is provided along the path of the plastic film (11) in succession to the station for spreading adhesive and before the respective calender.

5. Apparatus according to claim 4, wherein the drying station (22) comprises a blower system (30) and a chromium-plated heated roll (28).

6. Apparatus according to claim 5, wherein the blower system (30) covers an arc of at least 120° of the circumference of the chromium-plated heated roll (28).

7. Use of the apparatus of claim 1 to apply a plastic coating to both sides of a support in which a heat-fusible plastic film (111) is used as the plastic film.

8. Use according to claim 7, wherein the first chromium-plated roll (17) polished to a mirror finish takes on a surface temperature of about 80°C - 140°C, but advantageously about 110°C.

9. Use of the apparatus of claim 1 or according to the use of claims 7 or 8, wherein a layer of thermosetting adhesive is interposed between the plastic film (11) and the support (12).

10. Use of the apparatus of claim 1 or according to the use of one of the claims 7 to 9, wherein the adhesive layer is spread (21) on the plastic film (11) being fed and is then dried (22) before the application of the film (11) to the support (12).

11. Use according to claim 9 or 10, wherein the adhesive layer is spread in a station (21) for spreading the adhesive, the station (21) comprising at least one spreader roll (23), a tank (24) to hold adhesive and a dosage roll (29), the spreader roll (23) cooperating with a heated counter-thrust roll (31).

12. Use according to one of the claims 9 to 11, wherein the adhesive layer is dried in a drying station (22) comprising a blower system (30) and a chromium-plated heated roll (28).

13. Use according to claim 12, wherein the blower system (30) covers an arc of at least 120° of the circumference of the chromium-plated heated roll (28).

## Patentansprüche

1. Eine Vorrichtung zum beidseitigen Beschichten einer Materialbahn, wobei die Vorrichtung dafür geeignet ist, Kunststoff-Filme (11, 111)kontinuierlich auf Trägermaterialien (12) aus Papier, gewebtem Textil, Metallfilien, etc. aufzubringen zum Zwecke des Schutzes, der Verstärkung und/oder der Oberflächenveredelung, wobei das Trägermaterial (12) als Endlosbahn oder in Form von Bögen eingesetzt wird und die Vorrichtung im wesentlichen zwei identische Kalander (16) beinhaltet, wobei jeder Kalander (16) aus zwei Walzen (17, 18) besteht, von denen eine Walze einen kleineren Durchmesser besitzt und auf der Seite des Trägermaterials (12) oder des ersten Kunststoff-Films, der soeben aufgebracht worden ist, angebracht ist, und die beiden Kalander entlang des Förderwegs des Trägermaterials (12) hintereinandergeschaltet sind, dadurch gekennzeichnet, daß jeder Kalander (16) aus mindestens einer ersten beheizten, hochglanzpolierten Stahlwalze (17) besteht, und auf der Seite des jeweiligen Kunststoff-Films, der aufgebracht werden soll, angebracht ist und aus einer zweiten, unbeheizten, gummierten Walze (18) mit kleinerem Durchmesser, wobei die Kalander (16) hintereinandergeschaltet auf einer im wesentlichen horizontalen Ebene (15) zum Aufbringen der Kunststoffbeschichtung auf dem Trägermaterial (12) angebracht sind und im wesentlichen umgekehrt um 180° gedreht in Bezug auf die Hauptebene (15) zum Aufbringen der Kunststoffbeschichtung angebracht ist und die Ebene, in der die Kalander (16) liegen im Winkel von ungefähr 90° angeordnet sind und quer zur Hauptebene (16) des Aufbringens der Kunststoffbeschichtung liegen und der Kunststoff-Film (11, 111) mit der jeweiligen chrombeschichteten Stahlwalze (17) über mindestens einen Winkel von 90° der ihrer Oberfläche zusammenwirkt.

2. Vorrichtung gemäss Anspruch 1, worin eine Auftragsstation (21) zum Auftragen eines Klebstoffes auf dem Kunststoff-Film auf der Seite, auf dem der Kunststoff-Film (11) aufgebracht wird, entlang des Transportweges des Kunststoff-Filmes (11) bereitgestellt wird und vor dem jeweiligen Kalander (16) sich befindet.

3. Eine Vorrichtung gemäss Anspruch 2, worin die Auftragsstation (21) zur Aufbringung des Klebstoffes mindestens eine Auftragswalze (23) beinhaltet, einen Tank (24) für die Aufbewahrung des Klebstoffes und eine Dosierwalze (29), wobei die Auftragswalze (23) mit einer beheizten Andrückwalze (31) zusammenwirkt.

4. Vorrichtung gemäss der Ansprüche 2 oder 3, worin eine Trocknungsstation (22) zum Trocknen des Klebstoffes, welcher auf den Kunststoff-Film (11) aufgebracht wurde, entlang des Transportweges des Kunststoff-Films (11) bereitgestellt wird und der Station zum Auftragen des Klebstoffes nachgeschaltet ist, und sich vor dem jeweiligen Kalander sich befindet.

5. Vorrichtung gemäss Anspruch 4, worin die Trocknungsstation (22) ein Gebläsesystem (30) und eine verchromte, beheizte Walze (28) beinhaltet.

6. Vorrichtung gemäss Anspruch 5, worin das Gebläsesystem (30) einen Winkel von mindestens 120° des Umfangs der verchromten, beheizten Walze (28) abdeckt.

7. Die Anwendung der Vorrichtung gemäss Anspruch 1 zum beidseitigen Beschichten einer Materialbahn, in der ein hitzeschmelzender Kunststoff-Film (111) als Kunststoff-Film zur Anwendung kommt.

8. Die Anwendung gemäss Anspruch 7, worin die erste, verchromte, hochglanzpolierte Walze (17), eine Oberflächentemperatur von ungefähr 80°C bis 140°C besitzt, aber vorzugsweise ungefähr 110°C.

9. Die Anwendung der Vorrichtung gemäss Anspruch 1 oder gemäss der Anwendung der Ansprüche 7 oder 8, worin ein thermoplastischer Klebstoff zwischen dem Kunststoff-Film (11) und dem Trägermaterial (12) angebracht ist.

10. Die Anwendung der Vorrichtung von Anspruch 1 oder gemäss der Anwendung einer der Ansprüche 7 bis 9, worin die Klebstoff-Schicht auf dem Kunststoff-Film (11) aufgetragen wird und danach vor der Aufbringung des Filmes (11) auf dem Trägermaterial (12) getrocknet wird (22).

11. Die Anwendung gemäss Anspruch 9 oder 10, worin die Klebstoffschicht in einer Station (21) zum Auftragen des Klebstoffes aufgebracht wird, wobei diese Auftragestation (21) mindestens eine Auftragswalze (23) beinhaltet, einen Tank (24) zur Aufnahme des Klebstoffes und eine Dosierwalze (29), wobei die Auftragswalze (23) mit einer beheizten Andrückwalze (31) zusammenwirkt.

12. Die Anwendung gemäss eines der Ansprüche 9 bis 11, worin die Klebstoffschicht in einer Trockenstation (22) getrocknet wird, wobei diese ein Gebläsesystem (30) und eine verchromte, beheizte Walze (28) beinhaltet.

13. Die Anwendung gemäss Anspruch 12, worin das Gebläsesystem (30) einen Winkel von mindestens 120° des Umfangs der verchromten, beheizten Walze (28) abdeckt.

## Revendications

1. Appareil pour appliquer en ligne un revêtement plastique sur les deux côtés d'un support, le dispositif convenant pour appliquer en continu des films plastiques (11, 111) sur des supports de type papier, des tissus tissés, des feuilles métalliques, etc., dans le but de protection, renforcement et/ou fini de surface, le support (12) étant continu ou constitué de feuilles et le dispositif comprenant deux calandres (16) essentiellement identiques, chacune étant constituée de deux rouleaux (17, 18), l'un d'eux ayant un plus petit diamètre et étant disposé sur le côté du support (12) ou du premier film plastique qui a déjà été appliqué, les deux calandres étant positionnées en succession le long du chemin d'avancement du support (12), caractérisé en ce que chaque calandre (16) est constituée d'au moins un premier rouleau (17) chauffé d'acier chromé, poli de façon à obtenir un fini miroir et disposé du côté du film plastique respectif à appliquer, et d'un deuxième rouleau (18) non chauffé, caoutchouté, ayant ledit diamètre plus petit, les calandres (16) étant positionnées en succession dans un plan (15) substantiellement horizontal d'application du revêtement plastique sur le support (12) et étant disposées mutuellement décalées en rotation substantiellement de 180° par rapport au plan commun (15) d'application du revêtement plastique, et le plan dans lequel les calandres sont situées étant disposé selon un angle d'environ 90° et transversal au plan commun (15) d'application du revêtement plastique, le film plastique (11, 111) coopérant avec le rouleau d'acier chromé (17) respectif sur au moins 90° de la surface de celui-ci.

2. Appareil suivant la revendication 1, dans lequel une station (21) de pulvérisation d'adhésif sur le côté sur lequel le film plastique (11) est appliqué est prévue devant la calandre respective (16).

3. Appareil suivant la revendication 2, dans lequel la station (21) de pulvérisation de l'adhésif comprend au moins un rouleau de pulvérisation (23), un réservoir (24) de stockage de l'adhésif et un rouleau de dosage (29), le rouleau de pulvérisation (23), coopérant avec un rouleau de contre-pression chauffé (31).

4. Appareil suivant la revendication 2 ou 3, dans lequel une station de séchage (22) pour sécher l'adhésif appliqué sur le film plastique (11) est prévue le long du chemin du film plastique (11) à la suite de la station de pulvérisation de l'adhésif et avant la calandre respective.

5. Appareil suivant la revendication 4, dans lequel la station de séchage (22) comprend un système de soufflage (30) et un rouleau chromé chauffé (28).

6. Appareil suivant la revendication 5, dans lequel le système de soufflage (30) couvre un arc d'au moins 120° de la circonférence du rouleau chromé chauffé (28).

7. Utilisation de l'appareil de la revendication 1 pour appliquer un revêtement plastique sur les deux côtés d'un support, dans lequel un film plastique thermofusible (111) est utilisé comme film plastique.

8. Utilisation suivant la revendication 7, au cours de laquelle le premier rouleau chromé (17), poli de façon à obtenir un fini miroir, atteint une température de surface d'environ 80°C-140°C, mais avantageusement d'environ 110°C.

9. Utilisation de l'appareil suivant la revendication 1 ou suivant l'utilisation des revendications 7 ou 8, au cours de laquelle une couche d'adhésif thermocollant est interposée entre le film plastique (11) et le support (12).

10. Utilisation de l'appareil suivant la revendication 1 ou suivant l'utilisation des revendications 7 ou 8, au cours de laquelle la couche adhésive est pulvérisée (21) sur le film plastique (11) introduit et est ensuite séchée (22) avant l'application du film (11) sur le support (12).

11. Utilisation suivant la revendication 9 ou 10, au cours de laquelle la couche adhésive est pulvérisée dans une station (21) de pulvérisation de l'adhésif, la station (21) comprenant au moins un rouleau de pulvérisation (23), un réservoir (24) pour stocker l'adhésif et un rouleau de dosage (29), le rouleau de pulvérisation (23) coopérant avec un rouleau de contre-pression chauffé (31).

12. Utilisation suivant la revendication 9 ou 10, au cours de laquelle la couche adhésive est séchée dans une station de séchage comprenant un système de soufflage (30) et un rouleau chromé chauffé (28).

13. Utilisation suivant la revendication 12, au cours de laquelle le système de soufflage (30) couvre un arc d'au moins 120° de la circonférence du rouleau chromé chauffé (28).
